Europäisches Patentamt

European Patent Office

Office européen des brevets

(11) Veröffentlichungsnummer : **0 436 781 B1**

(12) **EUROPÄISCHE PATENTSCHRIFT**

(45) Veröffentlichungstag der Patentschrift :
01.12.93 Patentblatt 93/48

(21) Anmeldenummer : **90117901.0**

(22) Anmeldetag : **18.09.90**

(51) Int. Cl.⁵ : $C09J\ 7/02$

(30) Priorität : **16.11.89 DE 3938071**

(43) Veröffentlichungstag der Anmeldung :
**17.07.91 Patentblatt 91/29**

(45) Bekanntmachung des Hinweises auf die
Patenterteilung :
**01.12.93 Patentblatt 93/48**

(84) Benannte Vertragsstaaten :
**AT CH ES FR GB IT LI**

(56) Entgegenhaltungen :
**EP-A- 0 040 480**
**EP-A- 0 246 723**
**DE-A- 2 435 216**

(54) **Latexschaumstreichware als Meterware und Verfahren zur Herstellung einer solchen Ware.**

(73) Patentinhaber : **Nitex GmbH**
**Fuhrberger Weg 10**
**D-30900 Wedemark (DE)**

(72) Erfinder : **Hoffman, Uwe, Dipl.-Kfm.**
**Lührshof 10**
**D-3006 Burgwedel (DE)**

(74) Vertreter : **Rücker, Wolfgang, Dipl.-Chem.**
**Rücker & Minderop, Patentanwälte,**
**Bergiusstrasse 2b**
**D-30655 Hannover (DE)**

EP 0 436 781 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft eine Latexschaumstreichware als Meterware und ein Verfahren zur Herstellung einer solchen Ware.

Solche Latexschaumstreichware wird in großen Mengen als Meterware auf Anlagen von bis zu 100 m lang kontinuierlich mit einer Rakel in gleichmäßiger Höhe gestrichen, geliert, nach Bedarf - falls erforderlich - geprägt, vulkanisiert und auf große Rollen aufgewickelt.

Ein Textil oder ein Vlies dient gewöhnlich als Träger in dem der Schaum eindringt, damit die Reißfestigkeit an der ganzen Fläche nicht geringer ist als die des Schaumes selbst.

Will man den Latexschaum als Meterware ohne Träger haben, streicht man ihn auf ein Förderband, dessen Oberseite mit einem Trennmittel beschichtet ist. Dieser so gestrichene Latexschaum auf Textil oder Vlies findet umfangreiche Verwendung, z. B. zur Herstellung von Einlegesohlen oder Einbauteilen für die Schuhindustrie.

Die Streichware hat unterschiedliche Stärken, Flüssigkeiten, Farben, Perforation und dergleichen (DE-OS 33 06 425).

Die DE-A-24 35 216 betrifft einen Haftklebeeigenschaften aufweisenden Schaumstoffkörper, der dadurch hergestellt wird, daß eine Abziehfolie mit einem Polyurethanhaftklebevorstoff beschichtet und darauf ein Polyurethanschaumvorstoff aufgetragen wird und anschließend die Komponenten in den beiden Schichten unter Bildung einer Schaumstoffschicht zur Reaktion gebracht werden, damit die Klebestoffschicht werkstoffeigen mit der Schaumstoffschicht verbunden ist. Dennoch liegen letztendlich zwei Schichten vor.

Das Mehrschichtmaterial der EP-A-40480 umfaßt eine Polyolefin- oder Polybutadienschaumscheibe als Basisschicht, einen darauf durch Trockenbeschichtung aufgebrachten Polychloroprenkleber als Zwischenschicht und eine Mischung eines Klebers auf Wassergrundlage und eines anorganischen Füllstoffs als Oberflächenschicht oder Beschichtung. Dieses Mehrschichtmaterial soll eingesetzt werden als Grundmaterial zur Isolierung oder Polsterung auf Mauern, Decken oder anderen Oberflächenmaterialien.

Aus der EP-A-246723 sind Laminate aus einer Polyurethanschaumschicht und einer druckempfindlichen Kleberschicht bekannt, welche gemeinsam gehärtet werden. Beide Schichten können beispielsweise durch Coextrusion aufeinander aufgebracht werden. In allen Fällen gehen die Hafteigenschaften dann verloren, wenn durch Abrieb die Kleberschicht schließlich verschwunden ist.

Aufgabe der vorliegenden Erfindung ist es, einen Latexschaum mit Haftklebereigenschaften bereitzustellen, der den geschilderten Nachteil nicht aufweist.

Gelöst wird diese Aufgabe dadurch, daß in die oberste Latexschaumschicht ein Haftkleber eingearbeitet ist.

In Verfolgung des Erfindungsgedankens ist der Latexschaum, den man auch als Latex-Compound bezeichnet, aus einer oder mehreren Latexkomponenten geschaffen.

So kann der Latexschaum bestehen aus einem Naturlatex, einem Styrol-Butadien-Latex, einem Butadien-Acrylnitril-Latex oder Gemischen solcher Latizes und den für den vulkanisierten Latexschaum bekannten Zusätzen, wie Seife, Vulkanisationsmittel, Vulkanisationsbeschleuniger, Füllstoffe und dergleichen.

Wenn die Streichware aus einer Latexschicht bzw. aus einem Strich besteht, enthält diese Schicht erfindungsgemäß einen Haftkleber in Form einer Dispersion, die in den Latexschaum eingearbeitet wird. Die Menge der Haftkleberdispersion bezieht sich auf die Trockenanteile des Haftklebers und beträgt je nach gewünschtem Hafteffekt zwischen 10 und 50 Gew.%, vorzugsweise zwischen 20 und 40 Gew.%, bezogen auf den Trockenlatex.

Die Haftkleberdispersion kann auf der Basis eines Vinylacetat/Maleinat-Copolymers, eines Vinylacetat/Äthylen-Copolymerisats, eines Acrylsäureester-Copolymerisats oder ähnlicher Copolymerisate bestehen.

Die Teilchengröße der Dispersion ist für den Verwendungszweck nur von untergeordneter Bedeutung. Bevorzugt wird jedoch eine Teilchengröße zwischen 0,3 und 2,0 µm.

Durch die Einarbeitung der Haftkleberdispersion in den Latexschaum entsteht ein Latexschaum, der in dieser Ganzheit den Haftklebereffekt aufweist. Ein solcher Schaum kann auch Abrieb vertragen, ohne seine Hafteigenschaften zu verlieren.

Will man ursprünglich oder zu Beginn eine besonders starke Haftwirkung erzeugen, so kann zusätzlich ein Strich auf den Latexschaum aufgetragen werden, der ausschließlich aus einem Haftkleber besteht. Die Latexschaummasse wird zusammen mit Geliermittel, wie Ammoniumacetat oder Natriumsilicofluorid nach bekannten Verfahren in der gewünschten Dichte auf den Träger aufgetragen, geliert und anschließend bei Temperaturen von 120 bis 140 °C vulkanisiert.

Die Ware wird dann anschließend auf Raumtemperatur abgekühlt und die Latexschaumoberfläche mit einem Dehäsivpapier oder einer Kunststoffolie abgedeckt. Die Abdeckung mit einer Kunststoffolie schützt die Latexschaumoberfläche gegen Verschmutzen während der Weiterverarbeitung bis zum Fertigartikel.

Außerdem wird dadurch eine Schädigung des Latexschaumes durch Lichteinwirkungen verhindert.

Drei Rezepturen sind in den nachfolgenden Beispielen für einen Latexschaum mit einem Haftklebergehalt aufgeführt.

| Compoundrezepturen: | Beispiele | 1 | 2 | 3 |
|---|---|---|---|---|
| Naturlatex | | 100 | 50 | 50 |
| Styrol-Butadien-Latex | | X | 50 | 40 |
| Butadien-Nitril-Latex | | X | X | 10 |
| Kaliumoleat (Seife) | | 2,0 | 1,7 | 1,7 |
| Bernsteinsäureester | | 0,5 | 0,4 | 0,2 |
| Vulkanisationsmittel | | 10 | 10 | 10 |
| Haftkleber | | 30 | 40 | 20 |

Alle Teile sind Gewichtsanteile auf Trockenanteile bezogen.

Der Compound aus Latexschaum und Haftkleber wird zusammen mit Geliermittel, wie Ammoniumacetat oder Natriumsilicofluorid nach bekannten Verfahren zu der gewünschten Dichte aufgeschäumt, der Träger damit beschichtet, die Schicht geliert und anschließend bei 120 bis 140 °C ausvulkanisiert. Die Ware wird dann anschließend auf Raumtemperatur abgekühlt und die Latexschaumoberfläche mit einem Dehäsivpapier oder einer Kunststoffolie abgedeckt.

Die Abdeckung mit einer Kunststoffolie, insbesondere mit einer transparenten, gegen UV-Strahlen schützende Folie, verleiht außer der schützenden Wirkung gegen Anschmutzen des Latexschaumes während der Weiterverarbeitung bis zum Fertigartikel auch einen Schutz gegen UV-Strahlen für den Latexschaum. Hiermit wird die Lichtalterung des Latexschaumes erheblich verzögert.

Die Viskosität kann eingestellt werden durch Vermischung von Carboxymethylcellulose, Hydroxyäthercellulose oder Natriumacrylat.

Die Streichware besteht aus einem Latexschaumstrich, der einen Haftkleber enthält.

Die Streichware kann auch aus mehreren Strichen von Latexschaum bestehen, wobei dann nur die oberste Latexschaumschicht mit der freiliegenden Oberfläche einen Haftkleberzusatz enthält. Die Latexschaumschichten oder Striche können unterschiedliche Dichte aufweisen und einen Träger besitzen oder trägerlos sein.

Der Latexschaum kann, wie an sich bekannt, auch gefärbt sein. Eine solche Meterware findet vielseitige Anwendung, beispielsweise zur Herstellung von Einlegesohlen, die aus Meterware durch Ausstanzen gewonnen werden und die nach Entfernen der Schutzfolie so in den Schuh eingelegt werden, daß die Haftkleberschicht auf die Oberfläche der Schuhinnenseite zum Liegen kommt. Dadurch wird verhindert, daß die Einlegesohle verrutscht durch die Bewegung des Fußes beim Gehen, aber dennoch herausnehmbar oder auswechselbar ist.

Die erfindungsgemäße Latexschaumstreichware ist außer für den oben genannten Zweck auch noch für viele andere Anwendungen im täglichen Leben, im Bereich der Medizin und des Sportes einsetzbar, überall dort, wo es darauf ankommt, die Reibung zwischen diesem Produkt und einem an sich darauf befindlichen Gegenstand stark zu erhöhen.

Unter dem Ausdruck Haftkleber wird jeder Haftkleber verstanden, der mit dem gewählten Latex verträglich ist und eine elastische und dauernd klebefähige Selbstklebemasse ist mit großen Adhäsions- und kleinen Kohäsionskräften, die schon unter geringem Druck bei Raumtemperatur auf den verschiedensten Oberflächen haftet und deren Verbindung mehrfach gelöst und wieder hergestellt werden kann. In Verfolgung des Erfindungsgedankens wird der Haftkleber in einen Latex eingearbeitet, der auf eine bestehende Streichware aufgedruckt, aufextrudiert und aufgestrichen wird. Der Latex kann auch mit einem Blähmittel oder einem Schaummittel zusätzlich vermischt sein.

**Patentansprüche**

1. Latexschaumstreichware als Meterware mit einer oder mehreren Latexschichten, **dadurch gekennzeich-**

**net**, daß in die oberste Latexschaumschicht ein Haftkleber eingearbeitet ist.

2. Latexschaumstreichware nach Anspruch 1, **dadurch gekennzeichnet**, daß der Latexschaum aus mehreren Schichten aufgebaut ist.

3. Latexschaumstreichware nach Anspruch 1 und 2, **dadurch gekennzeichnet**, daß der Latexschaum von unterschiedlicher Dichte ist, Zusätze wie Seife oder Füllstoffe enthält und gefärbt sein kann.

4. Latexschaumstreichware nach Anspruch 1 bis 3, **dadurch gekennzeichnet,** daß der Latexschaum aus natürlichem oder künstlichem Latex besteht, wie Styrol-Butadein-Latex, Butadein-Nitril-Latex oder einem Gemisch solcher Latizes.

5. Latexschaumstreichware nach Anspruch 1 bis 4, **dadurch gekennzeichnet**, daß die den Haftkleber enthaltende Schicht mit einer UV-Strahlung abschirmenden, abziehbaren Folie für die Zeit der Lagerung oder Verarbeitung abgedeckt ist.

6. Verfahren zur Herstellung einer Latexschaumstreichware als Meterware mit einer oder mehreren Schichten, **dadurch gekennzeichnet,** daß ein Haftkleber wenigstens in die oberste Latexschaumschicht eingearbeitet wird.

7. Verfahren nach Anspruch 6, **dadurch gekennzeichnet,** daß der Haftkleber eine Dispersion ist, die in den Latexschaum in einer Menge von 20 bis 50 Gewichtsteilen eingearbeitet wird.

8. Verfahren nach Anspruch 6, **dadurch gekennzeichnet,** daß der Haftkleber auf eine Latexschicht der Streichware ganz- oder teilflächig aufgetragen ist.

9. Verfahren nach Anspruch 8, **dadurch gekennzeichnet**, daß der Latex zusätzlich zu dem Haftkleber ein Blähmittel oder Schaummittel enthält.

## Claims

1. Article of foamed latex by the metre having one or more latex layers, characterised in that a contact adhesive is incorporated into the uppermost foamed latex layer.

2. Article of foamed latex according to Claim 1, characterised in that the foamed latex is built up from several layers.

3. Article of foamed latex according to Claims 1 and 2, characterised in that the foamed latex is of variable density, contains additives such as soap or fillers, and may be coloured.

4. Article of foamed latex according to Claims 1 to 3, characterised in that the foamed latex consists of natural or synthetic latex such as styrene-butadiene latex, butadienenitrile latex or a mixture of such latices.

5. Article of foamed latex according to Claims 1 to 4, characterised in that the layer containing the contact adhesive is covered with a UV-radiation screening film for the duration of the storage or processing.

6. Process for preparing an article of foamed latex by the metre having one or more layers, characterised in that a contact adhesive is incorporated into the uppermost foamed latex layer.

7. Process according to Claim 6, characterised in that the contact adhesive is a dispersion that is incorporated into the foamed latex in an amount of 20 to 50 parts by weight.

8. Process according to Claim 6, characterised in that the contact adhesive is applied over the whole area or part of the area of a latex layer of the article.

9. Process according to claim 8, characterised in that the latex contains a blowing agent or foaming agent in addition to the contact adhesive.

## Revendications

1. Article au mètre en mousse de latex avec une ou plusieurs couches de latex, caractérisé en ce qu'une colle d'accrochage est incorporée dans la couche de mousse de latex supérieure.

2. Article au mètre en mousse de latex selon la revendication 1, caractérisé en ce que la mousse de latex est constituée de plusieurs couches.

3. Article au mètre en mousse de latex selon les revendications 1 et 2, caractérisé en ce que la mousse de latex présente différentes densités, contient des additifs tels que savon ou matière de charge et peut être colorée.

4. Article au mètre en mousse de latex selon les revendications 1 à 3, caractérisé en ce que la mousse de latex est constituée de latex naturel ou synthétique tels que latex de styrène-butadiène, latex de butadiène-nitrile ou un mélange de ces latex.

5. Article au mètre en mousse de latex selon les revendications 1 à 4, caractérisé en ce que la couche contenant la colle d'accrochage est recouverte par une feuille amovible assurant une protection contre les rayons UV pendant la durée du stockage ou de la mise en oeuvre.

6. Procédé de fabrication d'un article au mètre en mousse de latex avec une ou plusieurs couches, caractérisé en ce qu'une colle d'accrochage est incorporée au moins à la couche de mousse de latex supérieure.

7. Procédé selon la revendication 6, caractérisé en ce que la colle d'accrochage est une dispersion qui est incorporée à la mousse de latex en quantité comprise entre 20 et 50 parties en poids.

8. Procédé selon la revendication 6, caractérisé en ce que la colle d'accrochage est appliquée sur toute la surface ou une partie de la surface d'une couche de latex de l'article au mètre.

9. Procédé selon la revendication 8, caractérisé en ce que le latex contient, outre la colle d'accrochage, un agent gonflant ou un agent moussant.